(19) Europäisches Patentamt
European Patent Office
Office européen des brevets

(11) **EP 1 614 710 B1**

(12) **EUROPEAN PATENT SPECIFICATION**

(45) Date of publication and mention of the grant of the patent:
**24.04.2019 Bulletin 2019/17**

(21) Application number: **04722663.4**

(22) Date of filing: **23.03.2004**

(51) Int Cl.:
***C08J 5/18*** *(2006.01)* ***C08L 23/04*** *(2006.01)*
*B01D 67/00* *(2006.01)* *B01D 69/02* *(2006.01)*
*H01M 2/16* *(2006.01)* *H01M 8/0289* *(2016.01)*

(86) International application number:
**PCT/JP2004/003901**

(87) International publication number:
**WO 2004/085525 (07.10.2004 Gazette 2004/41)**

(54) **MICROPOROUS POLYETHYLENE FILM**

MIKROPORÖSE POLYETHYLENFOLIE

FILM EN POLYETHYLENE MICROPOREUX

(84) Designated Contracting States:
**DE FR GB IT**

(30) Priority: **24.03.2003 JP 2003080481**
**22.10.2003 JP 2003362146**

(43) Date of publication of application:
**11.01.2006 Bulletin 2006/02**

(73) Proprietor: **ASAHI KASEI KABUSHIKI KAISHA**
**Tokyo 100-0006 (JP)**

(72) Inventors:
- **KONDO, Takahiko**
**Yokohama-shi, Kanagawa 2320052 (JP)**
- **OHASHI, Masahiro**
**5240032 (JP)**
- **NISHIMURA, Yoshifumi**
**5240044 (JP)**
- **HASEGAWA, Takuya**
**2330003 (JP)**

(74) Representative: **D Young & Co LLP**
**120 Holborn**
**London EC1N 2DY (GB)**

(56) References cited:
**EP-A- 0 547 237** **EP-A- 0 603 500**
**WO-A-2004/000933** **WO-A1-97/20883**
**JP-A- H0 221 559** **JP-A- 10 292 059**
**JP-A- 2000 001 557** **JP-A- 2003 217 554**

- **PATENT ABSTRACTS OF JAPAN vol. 014, no. 163 (E-0910), 29 March 1990 (1990-03-29) & JP 02 021559 A (NITTO DENKO CORP), 24 January 1990 (1990-01-24)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 614 710 B1

## Description

TECHNICAL FIELD

The present invention relates to a microporous polyethylene film and a battery separator including the same.

BACKGROUND ART

Microporous polyethylene films are now used in various applications such as microfiltration films, battery separators, condenser separators and materials for fuel cells. When used as a battery separator, in particular, as a lithium ion battery separator, a microporous polyethylene film is required to not only have general physical properties such as mechanical strength and permeability, but also excel in "fuse effect" and "heat resistance" so as to secure the safety of the battery.

The mechanism of "fuse effect" in the film as a separator of a battery is such that when the inside of the battery is overheated due to over charge or the like, the separator fuses and forms a film that coats the electrodes to interrupt current flow, thereby ensuring the safety of the battery. It is known that in microporous polyethylene films, their fusing temperature, that is, the temperature at which their fuse effect develops is around 140°C; but on the other hand, from the viewpoint of stopping the runaway reaction in the inside of batteries as soon as possible, it is considered that the lower the fusing temperature, the better.

Furthermore, considering its function, the shape of the separator has to be maintained even after fusing so as to maintain the electrical insulation between the electrodes. This means that the separator, or microporous polyethylene film is required to excel in "heat resistance", as described above. The "heat resistance" can be considered from two aspects: film rupture properties and heat shrinkable properties. For example, to secure the safety of batteries at 150°C, US Standard, "Standard for Lithium Batteries" UL1642, stipulates a safety evaluation standard for batteries that require batteries to be stored in an oven at 150°C for 10 minutes. To come up to this safety standard, the separator is preferably such that after being made pore-free by fusing, it does not rupture at temperatures of 150°C or higher and undergoes the least possible heat shrinkage, thereby being able to maintain its shape. Any direct contact of the anode and cathode electrodes caused by film rupture or heat shrinkage, particularly heat shrinkage of wound battery body across its width induces a short circuit in the inside of the battery, whereby the battery becomes unsafe. Thus, there is a strong demand for a separator having excellent heat resistance.

It is important that film-rupture resistance and low heat shrinkability are compatible with each other, and only a separator having excellent film-rupture resistance and low heat shrinkability at the same time deserves being referred to as separator having excellent heat resistance.

A number of microporous films have been developed aiming at securing the safety of batteries, in other words, improving both the fuse effect and the heat resistance of batteries. However, in actuality, disclosed have been only technologies for microporous films excelling in either fuse effect or heat resistance, and thus it has been difficult to provide a microporous polyethylene film that satisfies both the general physical property requirements, such as mechanical strength and permeability, and the safety requirements, such as fuse effect and heat resistance.

For example, a technology for providing heat resistance to a microporous film and lowering the fusing temperature of the same has been known in which ultrahigh molecular weight polyethylene is blended with low molecular weight polyethylene or branched- or linear-low density polyethylene, as described in Patent Documents 1 and 2. This method is expected to provide a microporous film with heat resistance, owing to its ultrahigh molecular weight component, while lowering the fusing temperature of the film to some extent. However, blending ultrahigh molecular weight polyethylene simply with low molecular weight polyethylene is insufficient to lower the fusing temperature. Further, blending ultrahigh molecular weight polyethylene with branched- or linear-low density polyethylene so as to lower the fusing temperature more effectively makes film rupture likely to occur at the interface between the two types of polyethylene, because ultrahigh molecular polyethylene has a poor affinity for branched- or linear-low density polyethylene resulting in poor film-rupture resistance. Furthermore, increase in the amount of branched- or linear-low density polyethylene added lowers the degree of crystallinity of the film, thereby making it difficult to make the film porous, which poses a problem of affecting the permeability of the film.

There is proposed in Patent Document 3 a microporous polyethylene film produced by blending a specific high molecular weight polyethylene copolymer with high density polyethylene, thereby having a low fusing temperature and a certain degree of film rupture resistance. This microporous polyethylene film, however, still poses a problem of having increased heat shrinkage because it is composed of high molecular weight components alone.

There is proposed in Patent Document 4 a microporous polyethylene film which is composed of high density polyethylene and polyethylene having a specific melting point, thereby having a lower fusing temperature. However, it is difficult to allow a microporous polyethylene film to have mechanical strength, permeability and heat resistance in a well-balanced manner, while maintaining its low fusing temperature, by simply adding polyethylene having a specified

melting point, particularly when the film is made thin.

Patent Document 1: JP-A-2-21559
Patent Document 2: JP-A-5-25305
Patent Document 3: JP 3113287 (USP 6168858, EP 814117B1)
Patent Document 4: JP-A-2002-338730

DISCLOSURE OF THE INVENTION

Accordingly, the object of the present invention is to overcome the above described problems, thereby providing a microporous polyethylene having excellent mechanical strength and permeability, and besides, a low fusing temperature and high heat resistance.

After intensive examination of the amount of the copolymer contained in polyethylene, the molecular weight of polyethylene, etc., the present inventors have found that, surprisingly, a microporous polyethylene film which includes a blend containing polyethylene copolymer having a specific flowability and density is superior in balance of mechanical strength, permeability and heat resistance to conventional microporous polyethylene films that have a low fusing temperature.

Specifically, the present invention is as follows:

(1) A microporous polyethylene film, including a blend that contains 10 to 90% of a high density polyethylene copolymer which has a viscosity average molecular weight (Mv) of 10000 to 250000, a melt index (MI) of 0.1 to 100 and a content of an $\alpha$-olefin unit with 3 or more carbon atoms of 0.1 to 1% by mole; and a high density polyethylene which has a viscosity average molecular weight (Mv) of 500000 to 5000000, wherein the blend has an Mv of 300000 to 4000000 and a content of an $\alpha$-olefin unit with 3 or more carbon atoms of 0.01 to 1% by mole, wherein the MI is measured at 190°C and a loading of 2.16 kg in accordance with JIS K-7210, and wherein the Mv is measured in accordance with ASTM-D4020, whereby the microporous membrane is dissolved in a decaline solution at 135°C, the intrinsic viscosity ([$\eta$]) measured, and the viscosity average molecular weight (Mv) calculated from the equation

$$[\eta] = 6.77 \times 10^{-4}\ Mv^{0.67}.$$

(2) The microporous polyethylene film according to (1), wherein the above described $\alpha$-olefin is propylene.

(3) The microporous polyethylene film according to (1) or (2), wherein the above described polyethylene having an Mv of 500000 to 5000000 is a blend of two or three kinds selected from the following polyethylenes (A), (B) and (C):

(A) the above described polyethylene having an Mv of 1500000 or more and less than 5000000; (B) the above described polyethylene having an Mv of 600000 or more and less than 1500000; and (C) the above described polyethylene having an Mv of 250000 or more and less than 600000.

(4) The microporous polyethylene film according to (1) or (2), wherein the above described polyethylene having an Mv of 500000 to 5000000 is an ultrahigh molecular weight polyethylene having an Mv of 1500000 or more.

(5) The microporous polyethylene film according to any one of (1) to (4), having a film rupture temperature of 150°C or higher, wherein the film rupture temperature is measured in accordance with the procedure described below.

(6) The microporous polyethylene film according to any one of (1) to (5), having a shrinkage force at 150°C of 2N or less, wherein the shrinkage force is measured in accordance with the procedure described below.

(7) The microporous polyethylene film according to any one of the above (1) to (6), having a fusing temperature of 140°C or less, wherein the fusing temperature is measured in accordance with the procedure described below.

(8) The microporous polyethylene film according to any one of the above (1) to (7), having a thickness of 5 to 24 $\mu$m, wherein the thickness is measured using a dial gauge.

(9) The microporous polyethylene film according to any one of the above (1) to (8), having a porosity of 30 to 70%, wherein the porosity is calculated by collecting 10 x 10 cm square samples, measuring the volume and mass of the samples and using the measured values in the following equation

$$\text{porosity (\%)} = (\text{Volume (cm}^3) - \text{Mass (g)/Density of polymer composition)/Volume (cm}^3) \times 100.$$

(10) The microporous polyethylene film according to any one of the above (1) to (9), having an air permeability of 100 seconds or more and 600 seconds or less, wherein the air permeability is measured with a Gurley air permeability tester in accordance with JIS P-8117.

(11) A battery separator, including a microporous film according to any one of the above (1) to (10).

The microporous film of the present invention excels in mechanical strength, permeability and productivity and has a low fusing temperature and high heat resistance; and therefore, it is preferable as a battery separator.

BRIEF DESCRIPTION OF THE DRAWINGS

FIGS. 1A to 1C are views showing a measuring device for measuring the fusing temperature and short-circuit temperature of a film: FIG. 1A is a schematic view; FIG. 1B a plan view of nickel foil 2A; and FIG. 1C a plan view of nickel foil 2B.

BEST MODE FOR CARRYING OUT THE INVENTION

In the following the present invention will be described in detail in terms of its preferred embodiments.

Generally, the microporous film of the present invention includes a blend of a high density polyethylene copolymer; and high density- or homo-polyethylene (hereinafter sometimes referred to simply as "blend").

From the viewpoint of flowability and shrinkage force relaxiation at the time of shutdown and moldability, the melt index (MI) of the high density polyethylene copolymer is 0.1 to 100 and preferably 0.5 to 10. The viscosity average molecular weight (Mv) of the same is 10000 to 250000.

The comonomer of the high density polyethylene copolymer is an $\alpha$-olefin with 3 or more carbon atoms (hereinafter sometimes referred to simply as "comonomer"), and examples of such comonomers include propylene, butane, pentene, hexane, heptene and octane. From the viewpoint of the affinity for other types of polyethylene, propylene, which has 3 carbon atoms, is most preferable of the above comonomers.

The amount of the $\alpha$-olefin unit with 3 or more carbon atoms in the high density polyethylene copolymer is 0.1 to 1% by mole and preferably 0.2 to 0.8% by mole per 100% of ethylene unit in the same. If the amount is less than 0.1% by mole, the effect of lowering the melting point is not produced, whereas if the amount is more than 1% by mole, the degree of crystallinity of the resultant film lowers, resulting in a microporous film of poor permeability.

The density of the high density polyethylene copolymer needs to be high from the viewpoint of melting point and permeability, though it is related to the amount of the $\alpha$-olefin unit with 3 or more carbon atoms contained in the polyethylene. The term "high density" herein used means 0.93 to 0.97 and preferably 0.94 to 0.96.

The high density polyethylene copolymer used in the present invention can be produced by various known processes. For example, it can be produced by polymerization using catalyst supported by a chromium compound, Ziegler catalyst containing magnesium compound or metallocene catalyst as disclosed in JP-B-1-12777.

The polyethylene blended with the high density polyethylene copolymer (hereinafter sometimes referred to simply as "polyethylene blended") is preferably high density polyethylene which contains less than 0.1% of comonomer unit or homopolyethylene which contains no comonomer. The term "high density" herein used may be defined as the same as that used in the above described a high density polyethylene copolymer.

Specifically, the microporous film of the present invention contains, besides the high density polyethylene copolymer, at least any one type of polyethylene selected from the above described types of polyethylene which has an Mv of 500000 to 5000000 and preferably 600000 to 4000000, and it may contain any several types of polyethylene selected from the above described types of polyethylene. The percentage of these types of polyethylene in the blend is preferably 10 to 90%, more preferably 30 to 85% and much more preferably 40 to 80%. Blending two or three types of polyethylene selected from the following types of polyethylene:

(A) polyethylene having an Mv of 1500000 or more and less than 5000000,

(B) polyethylene having an Mv of 600000 or more and less than 1500000, and

(C) polyethylene having an Mv of 250000 or more and less than 600000 is particularly preferable, because doing so increases the affinity among the types of polyethylene blended, thereby making it possible to fully draw out the heat resistance, which a high molecular weight component brings about, and fusing properties, which a high density polyethylene copolymer brings about.

The percentage of the high density polyethylene copolymer in the blend is, from the viewpoint of fusing properties and permeability, 10 to 90%, preferably 15 to 70% and more preferably 20 to 60%. If the percentage is lower than 10%, the fusing properties become insufficient, whereas if the percentage is higher than 90%, the heating resistance becomes insufficient.

To further draw out the good fusing properties, which are brought about by the high density polyethylene copolymer, it is preferable that the polyethylene blended is ultrahigh molecular weight polyethylene having an Mv of 1500000 or more.

In this case, the percentage of the high density polyethylene copolymer in the blend is, from the viewpoint of fusing properties and mechanical strength, 10 to 90%, preferably 30 to 85% and more preferably 40 to 80%.

The Mv of the blend is, from the viewpoint of mechanical properties, 300000 to 4000000, preferably 400000 to 3000000 and more preferably 500000 to 1000000. If the Mv is less than 300000, the heat resistance becomes insufficient, whereas if the Mv is more than 4000000, the viscosity becomes too high, and thus, the moldability becomes poor. The Mv of the blend in the present invention means the Mv of the blend of raw materials and/or that of the end product.

The amount of the comonomer unit contained in the blend is 0.01 to 1% by mole and preferably 0.1 to 0.8% by mole per 100% of ethylene unit.

The blend may contain polyethylene having an Mv higher than that of the high density polyethylene or any other polyolefin, as long as the performance of the blend is not impaired. Examples of such polyolefins include, not limited to, polypropylene, polymethylpentene and polybutene. Of these polyolefins, polyethylene is most preferable.

Then the preferable process for producing a microporous polyethylene film of the present invention will be described.

A microporous polyethylene film is produced by: first dissolving polyethylene in a solvent called plasticizer at temperatures higher than or equal to its melting point of the polyethylene, cooling the resultant solution to temperatures lower than or equal to its crystallization temperature to form polymer gel and using the polymer gel to form a film (film forming step); stretching the resultant film (stretching step); and removing the plasticizer (plasticizer removing step). In this production process, the order of the stretching step and the plasticizer removing step can be reversed.

The term "plasticizer" herein used means an organic compound compatible with polyethylene at temperatures lower than or equal to its boiling point. Concrete examples of such plasticizers include: decaline, xylene, dioctyl phthalate, dibutyl phthalate, stearyl alcohol, oleyl alcohol, decyl alcohol, nonyl alcohol, diphenyl ether, n-decane, n-dodecane and paraffin oil. Of these plasticizers, paraffin oil, dioctyl phthalate and decaline are particularly preferable.

The percentage of the plasticizer in the polymer gel is, not limited to, preferably 20% to 90% and more preferably 30% to 80%. If the percentage is less than 20%, a microporous film having a proper porosity is sometimes hard to obtain, whereas if the percentage is more than 90%, the viscosity of the heated solution is lowered, which sometimes makes hard the continuous molding of the polymer gel into a sheet.

In the following the process for producing a microporous polyethylene film will be described in terms of the above described three steps that constitute the process: film forming step; stretching step; and plasticizer removing step.

## Film Forming Step

The process for forming a film is not limited to any specific one. A sheet having a thickness of several tens μm to several mm can be continuously formed by: for example, feeding mixed polyethylene powder and a plasticizer to an extruder; melt kneading both of the above materials at around 200°C; and casting the kneaded materials from an ordinary coat-hanger die to a cooling roll. The known inflation method may also be used. The method for feeding a raw material and a plasticizer in the above described process may be any known method in which resin and a plasticizer are fed in the completely solved state or in the slurry state. From the viewpoint of productivity, it is preferable to feed resin from a feed hopper and a plasticizer halfway to an extruder. In this case, the extruder may be provided with more than one feed opening for feeding a plasticizer.

In the above described process, powdered polyethylene having an average particle size of 1 to 150 μm is preferably used because the use of such polyethylene makes the melt kneading operation more efficient. Particularly when using ultrahigh molecular weight polyethylene having a Mv as high as or higher than 1500000, the average particle size of the polyethylene is preferably 1 to 150 μm, more preferably 1 to 100 μm and particularly preferably 1 to 50 μm.

Such powdery polyethylene, whose particle size is smaller than usual ones, may be prepared by sizing with a sieve or the like or can be produced by properly selecting a catalyst etc. in the step of polymerization.

## Stretching Step

Then, the resultant sheet is stretched at least mono axially to form a stretched film. Examples of stretching methods applicable include: not limited to, tentering, rolling and rolling. Of these methods, simultaneous biaxial stretching by tentering is particularly preferably used. The stretching temperature is in the range of normal temperature to melting point of the polymer gel used, preferably 80 to 140°C and more preferably 100 to 130°C. The draw ratio, on an area basis, is preferably 4 to 400, more preferably 8 to 200 and much more preferably 16 to 100. If the draw ratio is less than 4, the strength of the film is not necessarily sufficient for a separator, whereas if the draw ratio is more than 400, the film can be sometimes hard to stretch and the porosity of the resultant microporous film can sometimes be low.

Plasticizer Removing Step

Then, the plasticizer is removed from the stretched film to obtain a microporous polyethylene film. The method for removing the plasticizer is not limited to any specific one. For example, when using paraffin oil or dioctyl phthalate as a plasticizer, it may be extracted with an organic solvent such as methylene chloride or methyl ethyl ketone. And if the resultant microporous film is dried under heat at temperatures lower than or equal to the fusing temperature, the removal of the plasticizer becomes better. For example, when using a low-boiling compound, such as decaline, as a plasticizer, the plasticizer can be removed only by drying the resultant microporous film under heat at temperatures lower than or equal to the fusing temperature of the microporous film. In either case, to prevent the physical properties of the resultant microporous film from deteriorating due to its shrinkage, it is preferable to remove the plasticizer while placing restrictions on the film, for example, keeping the film in the fixed state. The organic solvent used in the plasticizer removing step can be recycled after completing the plasticizer removing operation by a known method, such as distillation.
To improve the permeability or the dimensional stability, it is also preferable to heat-treat the microporous polyethylene film produced by the above described process at temperatures as high as or lower than the fusing temperature of the film as necessary.

Physical Properties

The microporous polyethylene film obtained from the above described composition not only has mechanical strength and permeability equivalent to those of conventional microporous films, but also secure the high safety of batteries, when used as a battery separator.
The thickness of the microporous film of the present invention is preferably 1 to 500 μm, more preferably 5 to 100 μm and much more preferably 5 to 24 μm. If the thickness of the above described film is smaller than 1 μm, the mechanical strength may not always be sufficient, whereas if the thickness is larger than 500 μm, it may cause interference with the battery size and weight reduction.
The porosity of the microporous film of the present invention is preferably 30 to 70% and more preferably 35 to 50%. If the porosity is lower than 30%, the permeability may not always be sufficient, whereas if the porosity is higher than 70%, sufficient mechanical strength may sometimes not be obtained.
The air permeability is preferably 100 to 600 seconds, more preferably 120 to 550 seconds and much more preferably 150 to 500 seconds. If the air permeability is larger than 600 seconds, the permeability may not always be sufficient, whereas if the air permeability is smaller than 100 seconds, the pore diameter can sometimes be too large.
The puncture strength is, from the viewpoint of rupture resistance during the battery winding or inferior battery due to the short circuit between the electrodes, preferably 1 to 20 N/25 μm, more preferably 2 to 18 N/25 μm and particularly preferably 3 to 15 N/25 μm.
The fusing temperature is preferably 140°C or lower, more preferably 138°C or lower and much more preferably 135°C or lower so as to allow the microporous film to exert a current interrupting effect when the battery is heated due to over charge test or the like. If the fusing temperature is higher than 140°C, the current interruption by the shutdown may be delayed for example at an over charge test or the like, leading to the occurrence of exothermic reaction in the cell.
The film rupture temperature is preferably 150°C or higher and more preferably 155°C or higher. If the film rupture temperature is less than 150°C, the film as a separator may rupture at the time of battery test in an oven at 150°C.
The shrinkage force at 150°C is preferably 2N or smaller, more preferably 1.5N or smaller and much more preferably 1.0N or smaller. If the shrinkage force is larger than 2N, since the heat shrinkage force of the battery winding material across the width is large at high temperature, the electrodes may come into contact with each other, thereby causing short-circuit inside the battery.
The shrinkage stress at 150°C is preferably less than 600 kPa, more preferably 300 kPa or smaller, much more preferably 200 kPa or smaller and still much more preferably 150 kPa or smaller.
The reason the microporous polyethylene film obtained from the above described composition can have both fusing properties and heat resistance at the same time, while maintaining mechanical strength and permeability equivalent to those of conventional microporous films, has not been clarified yet. However, the reason is probably that the high density polyethylene copolymer having a relatively low molecular weight has a low crystalline melting point, while maintaining its high density, and has an effect of lowering the fusing temperature without sacrificing its permeating performance, and besides, since the high density polyethylene copolymer has a high affinity for the high molecular weight component, film rupture, which occurs due to the interface between the components, does not occur during fusing, and the component having a low molecular weight contributes to making it relatively easier to relax the shrinkage force, which is a cause of heat shrinkage.
In the following, the present invention will be described in further detail by several examples. In the following examples and comparative examples, the term "parts" all means "parts by mass".
The testing methods used for testing the characteristics shown in examples and comparative examples are as

follows.

(1) Film thickness

The film thickness was measured using a dial gauge (OZAKI MFG. CO., LTD.: "PEACOCK No. 25" (trademark)).

(2) Porosity

10 × 10 cm square samples were collected, and the volume and mass of the samples were measured. Then the porosity was calculated from the following equation using the measured values.

$$\text{Porosity (\%)} = (\text{Volume (cm}^3) - \text{Mass (g)/Density of polymer composition})/\text{Volume (cm}^3) \times 100$$

(3) Puncture strength

The puncture strength test was carried out using "KES-G5 Handy Compression Tester" (trademark), by KATO TECH CO. LTD. under the conditions: probe's tip curvature radius of 0.5 mm and puncture speed of 2 mm/sec. The maximum puncture load (N) was measured.

(4) Air permeability

The air permeability was measured with a Gurley air permeability tester in accordance with JIS P-8117.

(5) Content of comonomer units (Content of α-olefin unit with 3 or more carbon atoms)

The content of comonomer unit (% by mole) was obtained by: dividing the integral value (A), in molar terms, of signal intensity derived from comonomer by the sum of (A) and the integral value (B), in molar terms, of signal intensity derived from ethylene unit; and multiplying the obtained quotient by 100 in the $^{13}C$-NMR spectrum.

When using propylene as a comonomer, for example, if the signal intensity of $^{13}C$-NMR spectrum derived from the respective carbons in the following structural model are represented by I1, I1', I2, I3, Iα, Iβ, Iγ, Im and IM,

$CH_3-CH_2-CH_2-\cdots\cdots-(CH_2)_n-CH_2-CH_2-CH_2-CH-CH_2-CH_2-CH_2-\cdots\cdots-CH_2-CH_2-CH_3$

1 2 3 M γ β α |m α β γ 3 2 1

$CH_3$

1'

the following equation holds:

$$\text{Content of comonomer unit (\% by mole)} = (A)/[(A) + (B)] \times 100$$

wherein

$$(A) = (I1 + Im + I\alpha/2)/3 \text{ and } (B) = (I1 + I2 + I3 + IM + I\alpha/2 + I\beta + I\gamma)/2.$$

Since the effect of the terminals is small and therefore can be ignored, if the above described equation is

arranged by considering I1, I2 and I3 as Im and Iα, Iβ and Iγ as 2Im, the following equation holds:

$$\text{Content of comonomer unit (\% by mole)} = Im/[Im + (IM + 5Im)/2] \times 100$$

(6) Melt index

The melt index measured at 190°C and a loading of 2.16 kg in accordance with JIS K-7210 was represented by MI.

(7) Fusing temperature/Film rupture (short-circuit) temperature

A schematic view of a measuring device for measuring the fusing temperature is shown in FIG. 1A. Reference numeral 1 denotes a microporous film, reference numerals 2A and 2B denote two sheets of nickel foil having a thickness of 10 μm, and numerals 3A and 3B glass plates. Reference numeral 4 denotes an electric resistance meter (LCR meter "AG-4311" (trademark) manufactured by Ando Electric Co., Ltd.), which is connected to the two sheets of nickel foil 2A and 2B. Numeral 5 denotes a thermocouple, which is connected to a thermometer 6. Numeral 7 is a data collector, which is connected to the electric resistance meter 4 as well as the thermometer 6. Numeral 8 denotes an oven which is for heating the microporous film.

The measuring device will be described in further detail. As shown in FIG. 1B, the microporous film 1 is superimposed to the nickel foil 2A and fixed thereto lengthwise with "Teflon (trademark)" tape (the crosshatched portion of the figure). The microporous film 1 is impregnated with 1 mole/liter of lithium borofluoride solution (solvent: propylene carbonate/ethylene carbonate/γ-butyl lactone = 1/1/2) as an electrolyte. As shown in FIG. 1C, "Teflon (trademark)" tape (the crosshatched portion of the figure) with a 15 mm × 10 mm window portion at its center is laminated to the nickel foil 2B so that the nickel foil 2B is masked by the tape with the window portion left unmasked.

The two sheets of nickel foil 2A and nickel foil 2B are superimposed so that the microporous film 1 is sandwiched between them, and the two sheets of nickel foil having been superimposed are then sandwiched between the glass plates 3A and 3B. At this point, the window of the nickel foil 2B and the microporous film 1 are placed opposite to each other.

The two glass plates are fixed with a commercially available double clip. The thermocouple 5 is fixed to the glass plates with "Teflon (trademark)" tape.

The temperature and electric resistance of the microporous film 1 were continuously measured with the above described measuring device. The temperature was raised from 25°C to 200°C at a raising rate of 2°C/min and the electric resistance was measured with alternating current of 1 kHz. The term "fusing temperature" is defined as the temperature when the electric resistance of the microporous film reaches $10^3$ Ω. Further, the term "film rupture (short-circuit) temperature" is defined as the temperature when the electric resistance of the microporous film becomes lower than $10^3$ Ω again after fusing.

(8) Shrinkage force and stress at the time of fusing

Measurements were made using TMA 50 (trademark) by Shimadzu Corporation. Samples cut to 3 mm width in the TD direction were fixed to chucks so that the distance between the chucks became 10 mm and then set on specialized probes. The initial loading was 0.0098 N (1.0 g) and the probe temperature was raised from 30°C to 200°C at a raising rate of 10°C/min, and the shrinkage force (N) generated was measured. Further, the shrinkage force (N) when the temperature reached 150°C was measured, and the measured value was used to calculate the shrinkage stress from the following equation:

$$\text{Shrinkage stress (kPa)} = [\text{shrinkage force } (150°C)/(3 \times T)] \times 100 \times 9.807 \times 10000$$

wherein T represents the thickness of a sample (μm).

(9) Viscosity average molecular weight

Measurements were made in accordance with ASTM-D4020. The microporous film was dissolved in a decaline

solution at 135°C, the intrinsic viscosity [η] was measured, and the viscosity average molecular weight (Mv) was calculated from the following equation.

$$[\eta] = 6.77 \times 10^{-4}\ Mv^{0.67}$$

(10) GPC

Measurements were made using 150C ALC/GPC (trademark) by Waters Corporation under the following conditions, and a calibration curve was prepared using standard polystyrene. A molecular weight distribution curve in polystyrene terms was obtained by multiplying each of the molecular weight components by 0.43 (Q factor of polyethylene/Q factor of polystyrene = 17.7/41.3). The molecular weight of the unfused matter was calculated by measuring the weight.

Column: two columns of GMH6-HT (trademark) + two columns of GMH6-HTL (trademark) by TOSOH CORPORATION
Mobile phase: o-diclorobenzene
Detector: differential refractometer
Flow rate: 1.0 ml/min
Column temperature: 140°C
Sample concentration: 0.05 wt%

(11) Battery evaluation

Preparation of positive electrode

A slurry was prepared by dispersing in N-methylpyrrolidone (NMP) 92.2% by weight of lithium cobalt composite oxide $LiCoO_2$ as an active material, 2.3% by weight of flake graphite and of acetylene black as conductive materials, and 3.2% by weight of polyvinylidene fluoride (PVDF) as a binder. The slurry was coated on one side of aluminium foil 20 μm thick, which was to be a positive electrode current collector, with a die coater, dried at 130°C for 3 minutes, and compression molded with a roll pressing machine. The coating was performed so that the amount of the positive electrode active material coated was 250 g/m$^2$ and the bulk density of the active material was 3.00 g/cm$^3$. The resultant positive electrode was cut to about 40 mm wide to take the form of a strip.

Preparation of negative electrode

A slurry was prepared by dispersing in purified water 96.9% by weight of synthetic graphite as an active material and 1.4% by weight of ammonium salt of carboxymethylcellulose and 1.7% by weight of styrene-butadiene copolymer latex as binders. The slurry was coated on one side of copper foil 12 μm thick, which was to be a negative electrode current collector, with a die coater, dried at 120°C for 3 minutes, and compression molded with a roll pressing machine. The coating was performed so that the amount of the negative electrode active material coated was 106 g/m$^2$ and the bulk density of the active material was 1.35 g/cm$^3$. The resultant negative electrode was cut to about 40 mm wide to take the form of a strip.

Preparation of non-aqueous electrolyte

A non-aqueous electrolyte was prepared by dissolving $LiPF_6$ as a solute in a mixed solvent of ethylene carbonate/ethyl methyl carbonate = 1/2 (volume ratio) so that the concentration of $LiPF_6$ was 1.0 mole/liter.

Battery assembly

The above described microporous film separators, strip positive electrode and strip negative electrode were superimposed in the order of strip negative electrode, separator, strip positive electrode and separator and then wound more than one time into a swirl to prepare an electrode laminate. The electrode laminate was pressed into a flat sheet and packed in an aluminum container. The aluminum lead drawn out from the positive electrode current collector was connected to the container wall, while the nickel lead drawn out from the negative electrode current collector being connected to the terminal on the container lid. Then, the above described non-aqueous electrolyte was poured into the container. The lithium ion battery thus produced was 6.3 mm thick, 30 mm wide and 48 mm high and designed to have

a nominal service capacity of 620 mAh.

The battery was first charged at a current of 310 mAh (0.5 C) to a battery voltage of 4.2 V in the atmosphere at 25°C and continued to be charged for totaling 6 hours in such a manner as to throttle the current flow from 310 mAh while keeping the battery voltage at 4.2 V. To conduct an over charge test for this battery, Lhe battery was charged at a current of 620 mAh (1.0 C) to a battery voltage (the maximum charged voltage) of 10 V. The degree of exothermic reaction occurring in this state was observed.

Example 1

First, 10.5 parts of a high density polyethylene copolymer having an MI of 0.8 (Mv of 150000) (comonomer: propylene, propylene unit content of 0.6% by mole, density of 0.95), 10.5 parts of high density homopolyethylene having an Mv of 300000 (MI of 0.05) (comonomer unit content of 0.0% by mole, density of 0.95), 5.2 parts of high density homopolyethylene having an Mv of 700000 (MI of less than 0.01) (comonomer unit content of 0.0% by mole, density of 0.95), 8.8 parts of ultrahigh molecular weight homopolyethylene having an Mv of 2000000 (comonomer unit content of 0.0% by mole, density of 0.94), and 0.3 parts of tetrakis-[methylene-3-(3',5'-di-t-butyl-4'-hydroxyphenyl)propionate]methane as an antioxidant were blended and fed to a twin screw extruder through a feeder. Then, 65 parts of liquid paraffin (P-350 (trademark) manufactured by Matsumura Oil Co., Ltd.) was poured into the extruder through a side feed, the blend was kneaded at 200°C, and the kneaded blend was extruded from a T die fixed to the tip of the extruder, followed by cool solidification with a cast roll having been cooled to 25°C to form a gel sheet 1200 μm thick. The gel sheet was stretched at 120°C to 7- × 7-fold size with a simultaneous biaxial stretching machine, and the stretched film was immersed in methyl ethyl ketone to extract and remove the liquid paraffin and dried to obtain a microporous film. The obtained microporous film was heat fixed at 125°C. The physical properties of the obtained film are shown in Table 1. The molecular weight components calculated from the measurements of the film by GPC were as follows: the component having a molecular weight of 1000000 or more was 7% and the component having a molecular weight of 10000 or less was 5%.

Example 2

A microporous film was produced in the same manner as in example 1, provided that the polyethylene materials used were 10.5 parts of a high density polyethylene copolymer having an MI of 0.8 (Mv of 150000) (comonomer: propylene, propylene unit content of 0.6% by mole, density of 0.95), 14 parts of high density homopolyethylene having an Mv of 300000 (MI of 0.05) (comonomer unit content of 0.0% by mole, density of 0.95) and 10.5 parts of ultrahigh molecular weight polyethylene having an Mv of 2000000 (MI of less than 0.01) (comonomer unit content of 0.0% by mole, density of 0.94) and the thickness of the gel sheet was 1400 μm.

The physical properties of the obtained microporous film are shown in Table 1.

Example 3

A microporous film was produced in the same manner as in example 1, provided that the polyethylene materials used were 7 parts of a high density polyethylene copolymer having an MI of 1.0 (Mv of 120000) (comonomer: propylene, propylene unit content of 0.8% by mole, density of 0.94), 17.5 parts of high density homopolyethylene having an Mv of 300000 (MI of 0.05) (comonomer unit content of 0.0% by mole, density of 0.95) and 10.5 parts of ultrahigh molecular weight homopolyethylene having an Mv of 2000000 (MI of less than 0.01) (comonomer unit content of 0.0% by mole, density of 0.94) and the thickness of the gel sheet was 1000 μm.

The physical properties of the obtained microporous film are shown in Table 1.

Example 4

A microporous film was produced in the same manner as in example 1, provided that the polyethylene materials used were 14 parts of a high density polyethylene copolymer having an MI of 0.8 (Mv of 150000) (comonomer: propylene, propylene unit content of 0.6% by mole, density of 0.95) and 21 parts of high density homopolyethylene having an Mv of 700000 (MI of less than 0.01) (comonomer unit content of 0.0% by mole, density of 0.95). The physical properties of the obtained microporous film are shown in Table 1.

Example 5

A microporous film was produced in the same manner as in example 1, provided that the polyethylene materials used were 10.5 parts of a high density polyethylene copolymer having an MI of 2.0 (Mv of 100000) (comonomer: propylene, propylene unit content of 0.4% by mole, density of 0.95), 14 parts of high density homopolyethylene having

an Mv of 300000 (MI of 0.05) (comonomer unit content of 0.0% by mole, density of 0.95) and 10.5 parts of ultrahigh molecular weight polyethylene having an Mv of 2000000 (MI of less than 0.01) (comonomer unit content of 0.0% by mole, density of 0.94). The physical properties of the obtained microporous film are shown in Table 1.

Example 6

A microporous film was produced in the same manner as in example 1, provided that the polyethylene materials used were 26.3 parts of a high density polyethylene copolymer having an MI of 0.8 (Mv of 150000) (comonomer: propylene, propylene unit content of 0.6% by mole, density of 0.95) and 8.8 parts of ultrahigh molecular weight polyethylene having an Mv of 3000000 (MI of less than 0.01) (comonomer unit content of 0.0% by mole, density of 0.93, average particle size of 35 μm). The physical properties of the obtained microporous film are shown in Table 1. The molecular weight components calculated from the measurements of the film by GPC were as follows: the component having a molecular weight of 1000000 or more was 7% and the component having a molecular weight of 10000 or less was 7%.

Example 7

A microporous film was produced in the same manner as in example 1, provided that the polyethylene materials used were 29.8 parts of a high density polyethylene copolymer having an MI of 0.8 (Mv of 150000) (comonomer: propylene, propylene unit content of 0.6% by mole, density of 0.95) and 5.3 parts of ultrahigh molecular weight polyethylene having an Mv of 4500000 (MI of less than 0.01) (comonomer unit content of 0.0% by mole, density of 0.93, average particle size of 60 μm). The physical properties of the obtained microporous film are shown in Table 1.

Example 8

A microporous film was produced in the same manner as in example 1, provided that the stretching temperature was 117°C. The physical properties of the obtained microporous film are shown in Table 1.

Example 9

A microporous film was produced in the same manner as in example 1, provided that the thickness of the gel sheet was 900 μm and the stretching temperature was 115°C. The physical properties of the obtained microporous film are shown in Table 1.

Comparative Example 1

A microporous film was produced in the same manner as in example 1, provided that the polyethylene material used was 35 parts of high density homopolyethylene having an Mv of 700000 (MI of less than 0.01) (comonomer unit content of 0.0% by mole, density of 0.95). The physical properties of the obtained microporous film are shown in Table 1.

Comparative Example 2

A microporous film was produced in the same manner as in example 1, provided that the polyethylene material used was 35 parts of a high density polyethylene copolymer having an MI of 0.8 (Mv of 150000) (comonomer: propylene, propylene unit content of 0.6% by mole, density of 0.95). The physical properties of the obtained microporous film are shown in Table 1.

Comparative Example 3

A microporous film was produced in the same manner as in example 1, provided that the polyethylene materials used were 10.5 parts of copolymerized low density polyethylene having an MI of 0.3 (Mv of 170000) (comonomer: butene, butene unit content of 1.8% by mole, density of 0.92), 14 parts of high density homopolyethylene having a viscosity average molecular weight of 300000 (MI of 0.05) (comonomer unit content of 0.0% by mole, density of 0.95) and 10.5 parts of high density homopolyethylene having an Mv of 2000000 (MI of less than 0.01) (comonomer unit content of 0.0% by mole, density of 0.95). The physical properties of the obtained microporous film are shown in Table 1.

Comparative Example 4

A microporous film was produced in the same manner as in example 1, provided that the polyethylene materials

used were 10.5 parts of high density homopolyethylene having an Mv of 150000 (MI of 0.8) (comonomer unit content of 0.0% by mole, density of 0.97), 14 parts of high density homopolyethylene having an Mv of 300000 (MI of 0.05) (comonomer unit content of 0.0% by mole, density of 0.95) and 10.5 parts of ultrahigh molecular weight polyethylene having an Mv of 2000000 (MI of less than 0.01) (comonomer unit content of 0.0% by mole, density of 0.95). The physical properties of the obtained microporous film are shown in Table 1.

Comparative Example 5

A microporous film was produced in the same manner as in example 1, provided that 9 parts of polyethylene copolymer having an MI of 3.0 (Mv of 70000, melting point of 127°C, hexane unit content of 1.3% by mole, density of 0.94) and 36 parts of high density homopolyethylene having an Mv of 280000, and 55 parts of liquid paraffin were used. The physical properties of the obtained microporous film are shown in Table 1.

Comparative Example 6

A microporous film was produced in the same manner as in example 1, provided that 17.1 parts of copolymerized linear high density polyethylene having an MI of 0.8 (Mv of 120000) (comonomer: propylene, propylene unit content of 1.3% by mole, density of 0.94), 15.2 parts of high density homopolyethylene having an Mv of 600000 and 5.7 parts of high density homopolyethylene having an Mv of 100000, as polyethylene materials, and 62 parts of liquid paraffin were used. The physical properties of the obtained microporous film are shown in Table 1.

Table 1

| | | | Example 1 | Example 2 | Example 3 | Example 4 | Example 5 | Example 6 | Example 7 | Example 8 | Example 9 |
|---|---|---|---|---|---|---|---|---|---|---|---|
| Composition | Copolymerized linear high density PE1 | MI0.8, comonomer 0.6% | 30 | 30 | - | 40 | - | 75 | 85 | 30 | 30 |
| | Copolymerized linear high density PE2 | MI1.0, comonomer 0.8% | - | - | 20 | - | - | - | - | - | - |
| | Copolymerized linear high density PE3 | MI2.0, comonomer 0.4% | - | - | - | - | 30 | - | - | - | - |
| | Copolymerized linear high density PE4 | MI3.0, comonomer 1.3% | - | - | - | - | - | - | - | - | - |
| | Copolymerized linear high density PE5 | MI0.8, comonomer 1.3% | - | - | - | - | - | - | - | - | - |
| | Copolymerized linear low density PE | MI0.3, comonomer 01.3% | - | - | - | - | - | - | - | - | - |
| | High density PE1 | 100000 | - | - | - | - | - | - | - | - | - |
| | High density PE2 | 150000 | - | - | - | - | - | - | - | - | - |
| | High density PE3 | 300000 | 30 | 40 | 50 | - | 40 | - | - | 30 | 30 |
| | High density PE4 | 600000 | - | - | - | - | - | - | - | - | - |
| | High density PE5 | 700000 | 15 | - | - | 60 | - | - | - | 15 | 15 |
| | Ultrahigh molecular weight PE1 | 2000000 | 25 | 30 | 30 | - | 30 | - | - | 25 | 25 |
| | Ultrahigh molecular weight PE2 | 3000000 | - | - | - | - | - | 25 | - | - | - |
| | Ultrahigh molecular weight PE3 | 4500000 | - | - | - | - | - | - | 15 | - | - |

- to be cont'd -

Table 1 (Cont'd)

| | | | Comparative Example 1 | Comparative Example 2 | Comparative Example 3 | Comparative Example 4 | Comparative Example 5 | Comparative Example 6 |
|---|---|---|---|---|---|---|---|---|
| Composition | Copolymerized linear high density PE1 | MI0.8, comonomer 0.6% | - | 100 | - | - | - | - |
| | Copolymerized linear high density PE2 | MI1.0, comonomer 0.8% | - | - | - | - | - | - |
| | Copolymerized linear high density PE3 | MI2.0, comonomer 0.4% | - | - | - | - | - | - |
| | Copolymerized linear high density PE4 | MI3.0, comonomer 1.3% | - | - | - | - | 20 | - |
| | Copolymerized linear high density PE5 | MI0.8, comonomer 1.3% | - | - | - | - | - | 15 |
| | Copolymerized linear low density PE | MI0.3, comonomer 01.3% | - | - | 30 | - | - | - |
| | High density PE1 | 100000 | - | - | - | - | - | 45 |
| | High density PE2 | 150000 | - | - | - | 30 | - | - |
| | High density PE3 | 300000 | - | - | 40 | 40 | 80 | - |
| | High density PE4 | 600000 | - | - | - | - | - | 40 |
| | High density PE5 | 700000 | 100 | - | - | - | - | - |
| | Ultrahigh molecular weight PE1 | 2000000 | - | - | 30 | 30 | - | - |
| | Ultrahigh molecular weight PE2 | 3000000 | - | - | - | - | - | - |
| | Ultrahigh molecular weight PE3 | 4500000 | - | - | - | - | - | - |

- to be cont'd -

Table 1 (cont'd)

| | | | Example 1 | Example 2 | Example 3 | Example 4 | Example 5 | Example 6 | Example 7 | Example 8 | Example 9 |
|---|---|---|---|---|---|---|---|---|---|---|---|
| Film characteristics | Film Mv | 10000 unit | 50 | 52 | 48 | 40 | 45 | 48 | 43 | 50 | 50 |
| | Film comonomer | mole % | 0.2 | 0.2 | 0.5 | 0.3 | 0.1 | 0.5 | 0.6 | 0.2 | 0.2 |
| | Film thickness | µm | 17 | 20 | 12 | 17 | 17 | 17 | 17 | 17 | 8 |
| | Porosity | % | 40 | 42 | 38 | 40 | 40 | 42 | 43 | 40 | 40 |
| | Air permeability | sec | 400 | 450 | 280 | 390 | 500 | 480 | 470 | 400 | 200 |
| | Puncture strength | N | 5.1 | 6 | 4.5 | 5.4 | 5 | 4.7 | 4.6 | 6 | 4.5 |
| | Fusing temperature | °C | 137 | 137 | 135 | 135 | 135 | 132 | 130 | 137 | 137 |
| | Film rupture temperature | °C | 157 | 155 | 155 | 151 | 154 | 155 | 155 | 156 | 156 |
| | Shrinkage force (150°C) | N | 0.50 | 0.60 | 0.35 | 0.46 | 0.45 | 0.46 | 0.45 | 0.92 | 1.9 |
| | Shrinkage stress (150°C) | kPa | 99 | 100 | 98 | 90 | 89 | 90 | 88 | 180 | 800 |
| | Battery evaluation | | no exothermic reaction occurred | no exothermic reaction occurred | no exothermic reaction occurred | no exothermic reaction occurred | no exothermic reaction occurred | no exothermic reaction occurred | no exothermic reaction occurred | no exothermic reaction occurred | no exothermic reaction occurred |

Table 1 (cont'd)

| | | | Comparative Example 1 | Comparative Example 2 | Comparative Example 3 | Comparative Example 4 | Comparative Example 5 | Comparative Example 6 |
|---|---|---|---|---|---|---|---|---|
| Film characteristics | Film Mv | 10000 unit | 55 | 12 | 50 | 50 | 25 | 30 |
| | Film comonomer | mole % | 0 | 0.6 | 0.6 | 0 | 0.7 | 0.2 |
| | Film thickness | µm | 17 | 21 | 18 | 18 | 25 | 20 |
| | Porosity | % | 40 | 45 | 36 | 41 | 40 | 41 |
| | Air permeability | sec | 370 | 490 | 650 | 390 | 610 | 430 |
| | Puncture strength | N | 5.1 | 3.4 | 4.1 | 4.5 | 5 | 4.9 |
| | Fusing temperature | °C | 141 | 132 | 134 | 139 | 130 | 131 |
| | Film rupture temperature | °C | 151 | 140 | 145 | 150 | 142 | 145 |
| | Shrinkage force (150°C) | N | 1.0 | Membrane ruptured | Membrane ruptured | Membrane ruptured | Membrane ruptured | Membrane ruptured |
| | Shrinkage stress (150°C) | kPa | 200 | - | - | - | - | - |
| | Battery evaluation | | exothermic reaction occurred | no exothermic reaction occurred | no exothermic reaction occurred | exothermic reaction occurred | no exothermic reaction occurred | no exothermic reaction occurred |

INDUSTRIAL APPLICABILITY

The microporous film of the present invention can be suitably used in the fields of, for example, microfiltration films, battery separators, condenser separators and fuel cell materials.

## Claims

1. A microporous polyethylene film, comprising a blend that comprises 10 to 90% of a high density polyethylene copolymer which has a viscosity average molecular weight (Mv) of 10000 to 250000, a melt index (MI) of 0.1 to 100 and a content of an $\alpha$-olefin unit with 3 or more carbon atoms of 0.1 to 1% by mole; and a high density polyethylene

which has an Mv of 500000 to 5000000, wherein the blend has an Mv of 300000 to 4000000 and a content of an α-olefin unit with 3 or more carbon atoms of 0.01 to 1% by mole,
wherein the MI is measured at 190°C and a loading of 2.16 kg in accordance with JIS K-7210, and
wherein the Mv is measured in accordance with ASTM-D4020, whereby the microporous membrane is dissolved in a decaline solution at 135°C, the intrinsic viscosity ([η]) measured, and the viscosity average molecular weight (Mv) calculated from the equation

$$[\eta] = 6.77 \times 10^{-4}\ Mv^{0.67}.$$

2. The microporous polyethylene film according to claim 1, wherein the α-olefin is propylene.

3. The microporous polyethylene film according to claim 1 or claim 2, wherein the polyethylene having an Mv of 500000 to 5000000 is a blend of two or three kinds selected from the following polyethylenes (A), (B) and (C):

   (A) the polyethylene having an Mv of 1500000 or more and less than 5000000; (B) the polyethylene having an Mv of 600000 or more and less than 1500000; and (C) the polyethylene having an Mv of 250000 or more and less than 600000.

4. The microporous polyethylene film according to claim 1 or claim 2, wherein the polyethylene having an Mv of 500000 to 5000000 is an ultrahigh molecular weight polyethylene having an Mv of 1500000 or more.

5. The microporous polyethylene film according to any one of claims 1 to 4, having a film rupture temperature of 150°C or higher, wherein the film rupture temperature is measured in accordance with the description.

6. The microporous polyethylene film according to any one of claims 1 to 5, having a shrinkage force at 150°C of 2N or less, wherein the shrinkage force is measured in accordance with the description.

7. The microporous polyethylene film according to any one of claims 1 to 6, having a fusing temperature of 140°C or lower, wherein the fusing temperature is measured in accordance with the description.

8. The microporous polyethylene film according to any one of claims 1 to 7, having a thickness 5 to 24 μm, wherein the thickness is measured using a dial gauge.

9. The microporous polyethylene film according to any one of claims 1 to 8, having a porosity of 30 to 70%, wherein the porosity is calculated by collecting 10 x 10 cm square samples, measuring the volume and mass of the samples and using the measured values in the following equation

$$\text{porosity (\%)} = (\text{Volume (cm}^3) - \text{Mass (g)/Density of polymer composition})/\text{Volume (cm}^3) \times 100.$$

10. The microporous polyethylene film according to any one of claims 1 to 9, having an air permeability of 100 seconds or more and 600 seconds or less, wherein the air permeability is measured with a Gurley air permeability tester in accordance with JIS P-8117.

11. A battery separator, comprising a microporous film according to any one of claims 1 to 10.

**Patentansprüche**

1. Mikroporöse Polyethylenfolie, umfassend eine Mischung, die 10 bis 90 % eines Polyethylen-Copolymers hoher Dichte, das ein viskositätsmittleres Molekulargewicht (Mv) von 10.000 bis 250.000, einen Schmelzindex (MI) von 0,1 bis 100 und einen Gehalt an einer α-Olefin-Einheit mit 3 oder mehr Kohlenstoffatomen von 0,1 bis 1 Mol-% aufweist; und ein Polyethylen hoher Dichte mit einem Mv von 500.000 bis 5.000.000 umfasst, wobei die Mischung ein Mv von 300.000 bis 4.000.000 und einen Gehalt an einer α-Olefin-Einheit mit 3 oder mehr Kohlenstoffatomen von 0,01 bis 1 Mol-% aufweist,

wobei der MI bei 190 °C und einer Last von 2,16 kg gemäß JIS K-7210 gemessen wird und
wobei das Mv gemäß ASTM-D4020 gemessen wird, wobei die mikroporöse Membran in einer Decalinlösung bei 135 °C gelöst, die intrinsische Viskosität ([η]) gemessen und das viskositätsmittlere Molekulargewicht (Mv) aus der Gleichung

$$[\eta] = 6{,}77 \times 10^{-4}\ Mv^{0'67}$$

berechnet wird.

2. Mikroporöse Polyethylenfolie nach Anspruch 1, wobei es sich bei dem α-Olefin um Propylen handelt.

3. Mikroporöse Polyethylenfolie nach Anspruch 1 oder Anspruch 2, wobei es sich bei dem Polyethylen mit einem Mv von 500.000 bis 5.000.000 um eine Mischung von zwei oder drei Arten handelt, die aus den folgenden Polyethylenen (A), (B) und (C) ausgewählt sind:

   (A) dem Polyethylen mit einem Mv von 1.500.000 oder mehr und weniger als 5.000.000; (B) dem Polyethylen mit einem Mv von 600.000 oder mehr und weniger als 1.500.000; und (C) dem Polyethylen mit einem Mv von 250.000 oder mehr und weniger als 600.000.

4. Mikroporöse Polyethylenfolie nach Anspruch 1 oder Anspruch 2, wobei es sich bei dem Polyethylen mit einem Mv von 500.000 bis 5.000.000 um ein ultrahochmolekulares Polyethylen mit einem Mv von 1.500.000 oder mehr handelt.

5. Mikroporöse Polyethylenfolie nach einem der Ansprüche 1 bis 4 mit einer Folienrisstemperatur von 150 °C oder mehr, wobei die Folienrisstemperatur gemäß der Beschreibung gemessen wird.

6. Mikroporöse Polyethylenfolie nach einem der Ansprüche 1 bis 5 mit einer Schrumpfkraft bei 150 °C von 2 N oder weniger, wobei die Schrumpfkraft gemäß der Beschreibung gemessen wird.

7. Mikroporöse Polyethylenfolie nach einem der Ansprüche 1 bis 6 mit einer Schmelztemperatur von 140 °C oder weniger, wobei die Schmelztemperatur gemäß der Beschreibung gemessen wird.

8. Mikroporöse Polyethylenfolie nach einem der Ansprüche 1 bis 7 mit einer Dicke von 5 bis 24 μm, wobei die Dicke mit einer Messuhr gemessen wird.

9. Mikroporöse Polyethylenfolie nach einem der Ansprüche 1 bis 8 mit einer Porosität von 30 bis 70 %, wobei die Porosität durch Sammeln von quadratischen Proben mit einer Größe von 10 x 10 cm, Messen des Volumens und der Masse der Teilchen und unter Verwendung der gemessenen Werte in der folgenden Gleichung berechnet wird:

$$\text{Porosität (\%)} = (\text{Volumen (cm}^3) - \text{Masse (g)/Dichte der Polymerzusammensetzung})/\text{Volumen (cm}^3) \times 100.$$

10. Mikroporöse Polyethylenfolie nach einem der Ansprüche 1 bis 9 mit einer Luftdurchlässigkeit von 100 Sekunden oder mehr und 600 Sekunden oder weniger, wobei die Luftdurchlässigkeit mit einem Gurley-Luftdurchlässigkeitsprüfgerät gemäß JIS P-8117 gemessen wird.

11. Batterieseparator, umfassend eine mikroporöse Folie nach einem der Ansprüche 1 bis 10.

**Revendications**

1. Film de polyéthylène microporeux, comprenant un mélange qui contient 10 à 90 % d'un copolymère de polyéthylène de haute densité qui a une masse moléculaire moyenne viscosimétrique (Mv) de 10 000 à 250 000, un indice de fusion (IF) de 0,1 à 100 et une teneur en une unité α-oléfine comportant 3 atomes de carbone ou plus de 0,1 à 1 % par mole ; et un polyéthylène de haute densité qui a une Mv de 500 000 à 5 000 000, dans lequel le mélange a une Mv de 300 000 à 4 000 000 et une teneur en une unité α-oléfine comportant 3 atomes de carbone ou plus de 0,01 à 1 % par mole,

dans lequel l'IF est mesuré à 190 °C et avec un chargement de 2,16 kg selon JIS K-7210, et
dans lequel la Mv est mesurée selon la norme ASTM-D4020, la membrane microporeuse étant dissoute dans une solution de décaline à 135 °C, la viscosité intrinsèque ([η]) est mesurée, et la masse moléculaire moyenne viscosimétrique (Mv) est calculée selon l'équation

$$[\eta] = 6{,}77 \times 10^{-4}\ Mv^{0{,}67}.$$

**2.** Film de polyéthylène microporeux selon la revendication 1, dans lequel l'α-oléfine est un propylène.

**3.** Film de polyéthylène microporeux selon la revendication 1 ou la revendication 2, dans lequel le polyéthylène ayant une Mv de 500 000 à 5 000 000 est un mélange de deux ou trois types sélectionnés parmi les polyéthylènes suivants (A), (B) et (C) :

(A) le polyéthylène ayant une Mv de 1 500 000 ou plus et inférieure à 5 000 000 ; (B) le polyéthylène ayant une Mv de 600 000 ou plus et inférieure à 1 500 000 ; (C) le polyéthylène ayant une Mv de 250 000 ou plus et inférieure à 600 000.

**4.** Film de polyéthylène microporeux selon la revendication 1 ou la revendication 2, dans lequel le polyéthylène ayant une Mv de 500 000 à 5 000 000 est un polyéthylène à ultra-haute masse moléculaire ayant une Mv de 1 500 000 ou plus.

**5.** Film de polyéthylène microporeux selon l'une quelconque des revendications 1 à 4, ayant une température de rupture du film de 150 °C ou plus, la température de rupture du film étant mesurée conformément à la description.

**6.** Film de polyéthylène microporeux selon l'une quelconque des revendications 1 à 5, ayant une force de rétrécissement à 150 °C de 2 N ou moins, la force de rétrécissement étant mesurée conformément à la description.

**7.** Film de polyéthylène microporeux selon l'une quelconque des revendications 1 à 6, ayant une température de fusion de 140 °C ou moins, la température de fusion étant mesurée conformément à la description.

**8.** Film de polyéthylène microporeux selon l'une quelconque des revendications 1 à 7, ayant une épaisseur de 5 à 24 μm, l'épaisseur étant mesurée en utilisant un comparateur à cadran.

**9.** Film de polyéthylène microporeux selon l'une quelconque des revendications 1 à 8, ayant une porosité de 30 à 70 %, la porosité étant calculée en collectant des échantillons carrés de 10 x 10 cm, en mesurant le volume et la masse des échantillons, et en utilisant les valeurs mesurées dans l'équation suivante :

$$\text{porosité (\%)} = (\text{volume (cm}^3) - \text{masse (g)/densité de la composition de polymères)/volume (cm}^3) \times 100.$$

**10.** Film de polyéthylène microporeux selon l'une quelconque des revendications 1 à 9, ayant une perméabilité à l'air de 100 secondes ou plus et de 600 secondes ou moins, la perméabilité à l'air étant mesurée avec un dispositif de mesure de la perméabilité à l'air de Gurley conformément à JIS P-8117.

**11.** Séparateur de batterie, comprenant un film microporeux selon l'une quelconque des revendications 1 à 10.

FIG. 1A

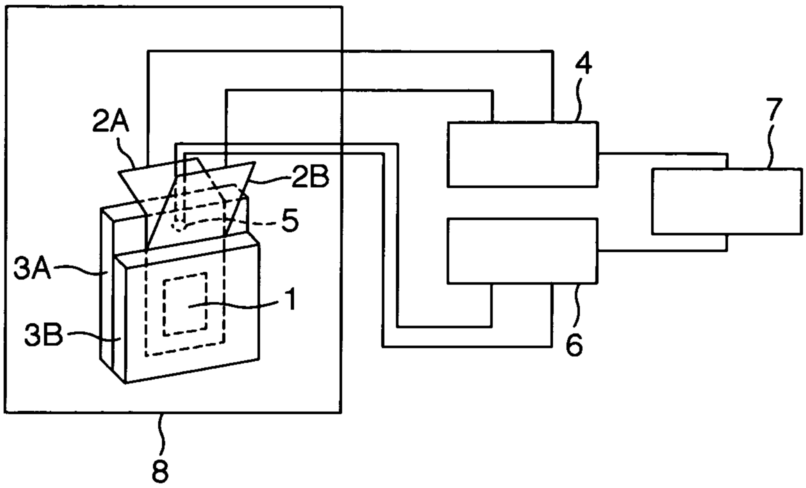


FIG. 1B

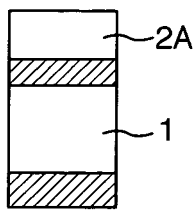


FIG. 1C

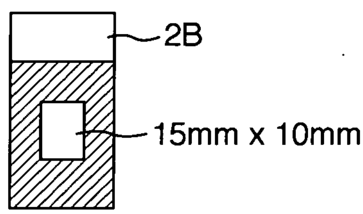

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2021559 A
- JP 5025305 A
- JP 3113287 B
- US P6168858 B
- EP 814117 B1
- JP 2002338730 A
- JP 1012777 B